# EUROPEAN PATENT APPLICATION

(11) **EP 4 470 653 A1**
(43) Date of publication of application: **04.12.2024**
(21) Application number: 24757861.0
(22) Date of filing: 16.02.2024
(51) Int. Cl.: B01D 53/047, B01J 20/26, B01J 20/28, B01J 20/34, C08L 9/00, C08L 27/12, C08L 83/04

(54) **METHOD FOR ADSORBING FLUORINE-CONTAINING LOW MOLECULAR WEIGHT COMPOUND**

(30) Priority: 22.02.2023 JP 2023026604
(71) Applicant: Daikin Industries, Ltd., Osaka-shi, Osaka 530-0001 (JP); National Institute for Materials Science, Tsukuba-shi, Ibaraki 305-0047 (JP)
(72) Inventor: YONEDA, Satoru, Osaka-Shi, Osaka 530-0001 (JP); KISHIKAWA, Yosuke, Osaka-Shi, Osaka 530-0001 (JP); YAMAUCHI, Akiyoshi, Osaka-Shi, Osaka 530-0001 (JP); SAGISAKA, Shigehito, Osaka-Shi, Osaka 530-0001 (JP); YOSHIZAKI, Satoru, Osaka-Shi, Osaka 530-0001 (JP); ICHINOSE, Izumi, Tsukuba-shi, Ibaraki 305-0047 (JP)
(74) Representative: Hoffmann Eitle
(86) International application number: PCT/JP2024/005511
(87) International publication number: WO 2024/176967

(57) **Abstract**

According to this disclosure, it is possible to provide a method for adsorbing a fluorine-containing low molecular weight compound, the method comprising:
bringing an adsorbent and the fluorine-containing low molecular weight compound into contact with each other to cause the adsorbent to adsorb the fluorine-containing low molecular weight compound, wherein
the adsorbent comprises at least one polymer selected from the group consisting of an elastomer and a cured product of the elastomer, and
the elastomer comprises at least one elastomer selected from the group consisting of a hydrocarbon-based elastomer, a silicone elastomer, and a fluoroelastomer.

## Description

### Technical Field

This disclosure relates to a fluorine-containing low molecular weight compound and an adsorption method.

### Background Art

An example of a known method for adsorbing a low molecular weight compound includes a method in which the low molecular weight compound and an adsorbent are brought into contact with each other to cause the adsorbent to adsorb the low molecular weight compound.

### Citation List

### Patent Literature

Patent Literature 1: JP 2020-189269 A

### Summary of Invention

### Technical Problem

Patent Literature 1 discloses a method for adsorbing a flammable gas to an adsorbent containing a polymer, but does not disclose a method for adsorbing low molecular weight compounds other than a flammable gas.

It is an object of this disclosure to provide a method for adsorbing a fluorine-containing low molecular weight compound using an adsorbent containing a polymer.

### Solution to Problem

This disclosure includes the following aspects.
[1] A method for adsorbing a fluorine-containing low molecular weight compound, the method including:
   bringing an adsorbent and the fluorine-containing low molecular weight compound into contact with each other to cause the adsorbent to adsorb the fluorine-containing low molecular weight compound, wherein
   the adsorbent contains at least one polymer selected from the group consisting of an elastomer and a cured product of the elastomer, and
   the elastomer includes at least one elastomer selected from the group consisting of a hydrocarbon-based elastomer, a silicone elastomer, and a fluoroelastomer.
[2] The method for adsorbing a fluorine-containing low molecular weight compound according to [1], wherein the adsorbent is a particulate adsorbent.
[3] The method for adsorbing a fluorine-containing low molecular weight compound according to [2], wherein the adsorbent has a particle size of less than 1.0 mm.
[4] The method for adsorbing a fluorine-containing low molecular weight compound according to any one of [1] to [3], wherein the hydrocarbon-based elastomer is a diene-based elastomer.
[5] The method for adsorbing a fluorine-containing low molecular weight compound according to any one of [1] to [4], wherein the hydrocarbon-based elastomer includes a monomer unit represented by:

   -CH₂-C(-X¹)=CH-CH₂-

   wherein X¹ is a hydrogen atom, a chlorine atom, or an alkyl group having from 1 to 6 carbon atoms.
[6] The method for adsorbing a fluorine-containing low molecular weight compound according to any one of [1] to [5], wherein the hydrocarbon-based elastomer further includes a monomer unit represented by:

   -CH₂CHX²-

   wherein X² is a hydrogen atom, an alkyl group having from 1 to 6 carbon atoms, a cyano group, or a phenyl group.
[7] The method for adsorbing a fluorine-containing low molecular weight compound according to any one of [1] to [6], wherein the hydrocarbon-based elastomer is an acrylonitrile butadiene elastomer, and the acrylonitrile butadiene elastomer has an acrylonitrile content of 10 mol% or more and 60 mol% or less.
[8] The method for adsorbing a fluorine-containing low molecular weight compound according to any one of [1] to [7], wherein the silicone elastomer includes a compound represented by the average compositional formula:

   RₐSiO_{(4-a)/2}

   wherein R is an unsubstituted or substituted monovalent hydrocarbon group having from 1 to 10 carbon atoms, and each R is the same or different from each other, and
   a is from 1.9 to 2.1.
[9] The method for adsorbing a fluorine-containing low molecular weight compound according to [8], wherein R is an alkyl group, a cycloalkyl group, an alkenyl group, a vinyl group, an aryl group, or a group in which some or all of the hydrogen atoms of these groups are replaced with a halogen atom or a cyano group.
[10] The method for adsorbing a fluorine-containing low molecular weight compound according to any one of [1] to [9], wherein the silicone elastomer is polydimethylsiloxane.
[11] The method for adsorbing a fluorine-containing low molecular weight compound according to any one of [1] to [10], wherein the fluoroelastomer includes a monomer unit derived from a fluorine-containing monomer represented by the following formula:

   CF₂=CR¹R²

   wherein R¹ is a hydrogen atom or a fluorine atom,
   R² is a hydrogen atom, a fluorine atom, an alkyl group having from 1 to 6 carbon atoms optionally substituted with a fluorine atom, or an alkoxy group having from 1 to 6 carbon atoms optionally substituted with a fluorine atom.
[12] The method for adsorbing a fluorine-containing low molecular weight compound according to any one of [1] to [11], wherein the fluoroelastomer is a vinylidene fluoride/hexafluoropropylene copolymer, and the vinylidene fluoride/hexafluoropropylene copolymer has a molar ratio of vinylidene fluoride/hexafluoropropylene of from 45/55 to 85/15.
[13] The method for adsorbing a fluorine-containing low molecular weight compound according to any one of [1] to [12], wherein the fluorine-containing low molecular weight compound has a saturated vapor pressure in a temperature range of -150°C to 150°C and contains one or more fluorine atoms.
[14] The method for adsorbing a fluorine-containing low molecular weight compound according to any one of [1] to [13], wherein the fluorine-containing low molecular weight compound is at least one fluorocarbon represented by formula (1) or (2):

   CₚF_{q}Yᵣ (1)

   wherein p, q, and r are integers of 1 or more,
   q+r=2p+2, and
   each Y independently represents one atom selected from the group consisting of a halogen atom and a hydrogen atom,

      CₙFₘZₗ (2)
   wherein n, m, and 1 are integers of 1 or more,
   m+l=2n and n≥2, and
   each Z independently represents one atom selected from the group consisting of a halogen atom and a hydrogen atom.
[15] The method for adsorbing a fluorine-containing low molecular weight compound according to [14], wherein p is 1 or 2, and q is 2 or more.
[16] The method for adsorbing a fluorine-containing low molecular weight compound according to [14] or [15], wherein the halogen atom is a chlorine atom.
[17] The method for adsorbing a fluorine-containing low molecular weight compound according to any one of [14] to [16], wherein n is 2 or 3, and m is 2 or more.
[18] The method for adsorbing a fluorine-containing low molecular weight compound according to any one of [14] to [17], wherein Z is a hydrogen atom.
[19] The method for adsorbing a fluorine-containing low molecular weight compound according to any one of [1] to [18], wherein the fluorine-containing low molecular weight compound is at least one selected from the group consisting of chlorodifluoromethane, pentafluoromethane, 1,1,1,2-tetrafluoroethane, and 2,3,3,3-tetrafluoropropene.
[20] The method for adsorbing a fluorine-containing low molecular weight compound according to any one of [1] to [19], wherein an adsorption amount of the fluorine-containing low molecular weight compound in the adsorbent is controlled based on a difference between a polarizability of the adsorbent and the polarizability of the fluorine-containing low molecular weight compound.
[21] A method for adsorbing and desorbing a fluorine-containing low molecular weight compound, the method including:
   adsorbing a fluorine-containing low molecular weight compound by the method according to any one of [1] to [20]; and
   placing the adsorbent adsorbing the fluorine-containing low molecular weight compound under a reduced pressure condition to desorb the fluorine-containing low molecular weight compound from the adsorbent.
[22] A composition including:
   an adsorbent comprising at least one polymer selected from the group consisting of at least one elastomer selected from the group consisting of a hydrocarbon-based elastomer, a silicone elastomer, and a fluoroelastomer, and a cured product of the elastomer; and
   a fluorine-containing low molecular weight compound adsorbed to the adsorbent.

### Advantageous Effects of Invention

According to this disclosure, it is possible to provide a method for adsorbing a fluorine-containing low molecular weight compound by causing an adsorbent containing a polymer to adsorb the fluorine-containing low molecular weight compound.

### Description of Embodiments

### (Adsorption method)

The method for adsorbing a fluorine-containing low molecular weight compound of this disclosure includes:
bringing an adsorbent and the fluorine-containing low molecular weight compound into contact with each other to cause the adsorbent to adsorb the fluorine-containing low molecular weight compound, wherein
the adsorbent includes at least one polymer selected from the group consisting of an elastomer and a cured product of the elastomer, and
the elastomer comprises at least one elastomer selected from the group consisting of a hydrocarbon-based elastomer, a silicone elastomer, and a fluoroelastomer.

By having the above configuration, the adsorption method of this disclosure can cause the fluorine-containing low molecular weight compound to be adsorbed to the adsorbent containing a polymer. Further, while conventional adsorption methods selectively adsorb only a specific low molecular weight compound, the adsorption method disclosed in this disclosure allows a single type of adsorbent to adsorb a plurality of different types of fluorine-containing low molecular weight compounds, which can be useful for recovering fluorine-containing low molecular weight compounds. In addition, when a plurality of fluorine-containing low molecular weight compounds are adsorbed to one type of adsorbent, each of the plurality of fluorine-containing low molecular weight compounds can be adsorbed to the adsorbent at a specific ratio.

By bringing the adsorbent and the fluorine-containing low molecular weight compound into contact with each other, the fluorine-containing low molecular weight compound is adsorbed to the adsorbent. For example, the adsorption may be performed by sequentially performing the following steps. However, the adsorption method of this disclosure is not limited to the following steps.
i) Seal the adsorbent in a pressure container.
ii) Create a vacuum condition inside the pressure container in which the adsorbent is sealed.
iii) Introduce the fluorine-containing low molecular weight compound into the pressure container in which the adsorbent is sealed until a predetermined pressure is reached.

A conventional pressure container can be used to seal the adsorbent. For example, the pressure container may be a cylinder container. The volume of the pressure container is not limited, but may be, for example, from 10 ml to 100 ml, and may be, for example 50 ml. The amount of the adsorbent sealed within the pressure container may be, for example, from 1 g to 100 g, or from 10 to 20 g, and may be, for example, 10 g. The amount of the adsorbent sealed in the pressure container may be from 0.01 g/ml to 1 g/ml, or from 0.1 g/ml to 0.5 g/ml, and may be, for example, 0.2 g/ml.

Before introducing the fluorine-containing low molecular weight compound into the pressure container, a vacuum condition is created inside the pressure container in which the adsorbent is sealed. As used herein, "vacuum condition" is not limited to a perfect vacuum state, and also includes a state in which the interior is substantially a vacuum. Specifically, the pressure inside the pressure container in which the adsorbent is sealed may be, in terms of gauge pressure, from -0.1 MPa to -0.01 MPa, preferably from -0.1 MPa to -0.05 MPa, and more preferably from -0.1 MPa to -0.07 MPa. In one aspect, the pressure inside the pressure container in which the adsorbent is sealed may be -0.1 MPa in terms of gauge pressure.

The fluorine-containing low molecular weight compound is introduced into the pressure container until a predetermined pressure is reached. The predetermined pressure (hereinafter also referred to as "introduction pressure") may be set in accordance with the type of the fluorine-containing low molecular weight compound to be adsorbed to the adsorbent. For example, the introduction pressure may be, in terms of gauge pressure, preferably from 0.001 MPa to 10 MPa, more preferably from 0.01 MPa to 5 MPa, and further preferably from 0.1 MPa to 1 MPa.

When a hydrocarbon-based elastomer and a fluoroelastomer are used as the adsorbent, the introduction pressure may be, in terms of gauge pressure, 0.1 kPa or more and 50 kPa or less, preferably 0.5 kPa or more and 30 kPa or less, more preferably 1 kPa or more and 10 kPa or less, and particularly preferably 3 kPa or more and 7 kPa or less. For example, the introduction pressure may be 5 kPa.

When a silicone elastomer is used as the adsorbent, the introduction pressure may be, in terms of gauge pressure, 0.01 MPa or more and 10 MPa or less, preferably 0.05 MPa or more and 5 MPa or less, more preferably 0.1 MPa or more and 3.0 MPa or less, and particularly preferably 0.3 MPa or more and 1.0 MPa or less. For example, the introduction pressure may be 0.8 MPa.

The length of time that the adsorbent and the fluorine-containing low molecular weight compound are brought into contact with each other may be set in accordance with the type of the fluorine-containing low molecular weight compound to be adsorbed to the adsorbent. For example, the length of time may be 1 minute or more, preferably 30 minutes or more, and more preferably 120 minutes or more.

### (Adsorbent)

The adsorbent used in the adsorption method of this disclosure includes at least one polymer selected from the group consisting of an elastomer and a cured product of the elastomer. In this specification, "elastomer" refers to a polymer (that is, a polymer compound) that is in an elastomeric state at room temperature and pressure, and that has not been subjected to a chemical curing treatment. In this specification, "cured product of the elastomer" refers to a polymer obtained by curing the elastomer by a chemical curing treatment. Examples of the curing treatment include vulcanization and crosslinking.

Examples of the method for curing the elastomer include, but are not limited to, curing using a known vulcanizing agent, curing agent, and the like. The vulcanizing agent may be an organic peroxide such as dicumyl peroxide, benzoyl peroxide, t-butyl hydroperoxide, or 2,4-dichlorobenzoyl peroxide. A polyol such as bisphenol A can also be used. Further, a known vulcanization accelerator may be used in combination. In addition, examples of known vulcanizing agents include sulfur and 4,4'-dithiodimorpholine dimorpholine. Examples of sulfur include powdered sulfur, precipitated sulfur, highly dispersed sulfur, surface-treated sulfur, insoluble sulfur, and the like.

From the viewpoint of efficiently adsorbing the fluorine-containing low molecular weight compound to the adsorbent, the adsorbent used in the adsorption method of this disclosure may be a particulate adsorbent. The particle shape of the adsorbent is not limited, and may be, for example, spherical, flat, or irregular. From the viewpoint of ease of handling, the particulate adsorbent may be packed in a bag made of nylon mesh or the like, and the fluorine-containing low molecular weight compound may be adsorbed thereto.

The method for producing the particulate adsorbent is not limited, and may be any conventional method. For example, the particulate adsorbent may be produced by crushing a lump or pelleted polymer (e.g., an elastomer and/or a cured product of the elastomer) using a crusher. In order to carry out the crushing efficiently, the polymer (e.g., elastomer and/or cured product of the elastomer) may be frozen using liquid nitrogen or the like, and the frozen polymer may be crushed. Examples of other methods for producing the particulate adsorbent include a method in which the particles are obtained by growing and forming aggregates of atoms or molecules through chemical reactions. For example, the particulate adsorbent may be produced by emulsion polymerization, suspension polymerization, and the like.

From the viewpoint of efficiently adsorbing the fluorine-containing low molecular weight compound to the adsorbent, the particle size of the adsorbent may be less than 1.0 mm, preferably 900 µm or less, more preferably 500 µm or less, further preferably 300 µm or less, and particularly preferably 150 µm or less.

From the viewpoint of making the particulate adsorbent easy to handle, the particle size of the adsorbent may be 0.1 µm or more, preferably 1 µm or more, more preferably 5 µm or more, and further preferably 10 µm or more.

The "particle size of the adsorbent" means the maximum particle size of the adsorbent. The maximum particle size of the adsorbent can be determined by measuring with an optical microscope. For example, the particle size of the particle with the largest particle size within the range of the visual field obtained by observing the adsorbent with an optical microscope may be taken as the maximum particle size of the adsorbent. The maximum particle size of adsorbent may also be the particle size D99 when the cumulative particle volume from the small particle size side reaches 99% of the total particle volume in a particle size distribution determined by a laser diffraction/scattering method.

The particle size and maximum particle size of the adsorbent can be controlled by conventional means. For example, the maximum particle size of the adsorbent can be controlled by adjusting the crushing conditions of the crusher. Alternatively, the maximum particle size of the adsorbent can be adjusted to an adsorbent having a predetermined maximum particle size by classification.

The elastomer included in the adsorbent used in the adsorption method of this disclosure is at least one elastomer selected from the group consisting of a hydrocarbon-based elastomer, a silicone elastomer, and a fluoroelastomer. The hydrocarbon-based elastomer, the silicone elastomer, and the fluoroelastomer will be described below.

### [Hydrocarbon-based elastomer]

As used herein, "hydrocarbon-based elastomer" refers to a polymer having a hydrocarbon as a main component.

In one aspect, the hydrocarbon-based elastomer may be a linear hydrocarbon compound. In one aspect, the hydrocarbon compound may have one or more substituents. In one aspect, the hydrocarbon-based elastomer may contain a double bond partially between carbon atoms constituting the main chain.

Examples of the substituent for the above hydrocarbon compound include a hydrogen atom, a chlorine atom, or an alkyl group having from 1 to 6 carbon atoms.

In one aspect, the hydrocarbon-based elastomer may be a diene-based elastomer. As used herein, "diene-based elastomer" refers to an elastomer obtained using a diene monomer having a conjugated double bond as a raw material, or an elastomer obtained using a diene monomer having a conjugated double bond and one or more vinyl-based monomers copolymerizable with the diene monomer as raw materials. The diene-based elastomer may be a natural elastomer and/or a synthetic elastomer. The diene-based elastomer has a double bond in the main chain.

In one aspect, the diene-based elastomer may have one or more substituents. Examples of the substituent include a hydrogen atom, a chlorine atom, and an alkyl group having from 1 to 6 carbon atoms.

In one aspect, the hydrocarbon-based elastomer may include a monomer unit represented by:

-CH₂-C(-X¹)=CH-CH₂-

wherein X¹ is a hydrogen atom, a chlorine atom, or an alkyl group having from 1 to 6 carbon atoms.

The monomer unit represented by the above formula may be a monomer unit derived from a diene monomer.

X¹ is a hydrogen atom, a chlorine atom, or an alkyl group having from 1 to 6 carbon atoms.

The alkyl having from 1 to 6 carbon atoms is preferably an alkyl group having from 1 to 3 carbon atoms, and more preferably is a methyl group. The alkyl having from 1 to 6 carbon atoms may be linear or branched.

From the viewpoint of efficiently adsorbing the fluorine-containing low molecular weight compound to the adsorbent, X¹ may be a hydrogen atom.

In one aspect, in addition to the monomer unit represented by the above formula -CH₂-C(-X¹)=CH-CH₂-, the hydrocarbon-based elastomer may further include a monomer unit represented by:

-CH₂CHX²-

wherein X² is a hydrogen atom, an alkyl group having from 1 to 6 carbon atoms, a cyano group, or a phenyl group.

The monomer unit represented by the above formula may be a monomer unit derived from a vinyl-based monomer copolymerizable with the diene monomer.

The alkyl having from 1 to 6 carbon atoms is preferably an alkyl group having from 1 to 3 carbon atoms, and more preferably is a methyl group. The alkyl having from 1 to 6 carbon atoms may be linear or branched.

From the viewpoint of efficiently adsorbing the fluorine-containing low molecular weight compound to the adsorbent, X² may be a cyano group.

The molar ratio between the monomer unit represented by formula -CH₂-C(-X¹)=CH-CH₂- and the monomer unit represented by the formula -CH₂CHX²- included in the hydrocarbon-based elastomer is preferably from 40 to 90/60 to 10, more preferably from 45 to 70/55 to 30, and further preferably from 50 to 65/50 to 35.

In one aspect, examples of the hydrocarbon-based elastomer include a styrene-butadiene elastomer (SBR), a natural elastomer (NR), a polybutadiene elastomer (BR), a polyisoprene elastomer (IR), an acrylonitrile butadiene elastomer (NBR), a chloroprene elastomer (CR), an isoprene/isobutylene copolymer elastomer (IIR), an ethylene/propylene/diene copolymer elastomer (EPDM), and a halogenated butyl elastomer (HR).

In one aspect, from the viewpoint of efficiently adsorbing the fluorine-containing low molecular weight compound to the adsorbent, the hydrocarbon-based elastomer may be an NBR. From the same viewpoint, the content of acrylonitrile in the NBR may be 10 mol% or more and 60 mol% or less, preferably 30 mol% or more and 55 mol% or less, and more preferably 35 mol% or more and 50 mol% or less. The content of acrylonitrile in the NBR may be determined according to the method for quantifying acrylonitrile described in "ISO 24698-1 (2008)" or "JIS K 6451-1: 2016 Method for determining the amounts of synthetic elastomer-NBR-bound acrylonitrile".

The hydrocarbon-based elastomer that can be included in the adsorbent may be a commercially available hydrocarbon-based elastomer.

### [Silicone elastomer]

A silicone elastomer is a polymer in which an organic group is added to a structure in which a silicon atom is bonded to another silicon atom via an oxygen atom. In other words, a silicone elastomer is a polymer having a polyorganosiloxane backbone. The silicone elastomer may have a crosslinked structure, and can be obtained by crosslinking an organosiloxane, which is a silicone elastomer precursor.

The silicone elastomer may include a compound represented by the average compositional formula:

RₐSiO_{(4-a)/2}

wherein R is an unsubstituted or substituted monovalent hydrocarbon group having from 1 to 10 carbon atoms, and each R is the same or different from each other, and a is from 1.9 to 2.1.

In the formula, R is an unsubstituted or substituted monovalent hydrocarbon group having from 1 to 10 carbon atoms, and each R is the same or different from each other.

The "monovalent hydrocarbon group having from 1 to 10 carbon atoms" of the unsubstituted or substituted monovalent hydrocarbon group having from 1 to 10 carbon atoms, with each monovalent hydrocarbon group being the same or different from each other, may be linear or branched, and may contain a ring structure.

In one aspect, the "monovalent hydrocarbon group having from 1 to 10 carbon atoms" is preferably a monovalent hydrocarbon group having from 1 to 6 carbon atoms, and more preferably a monovalent hydrocarbon group having from 1 to 3 carbon atoms.

R may be an alkyl group, a cycloalkyl group, an alkenyl group, a vinyl group, an aryl group, or a group in which some or all of the hydrogen atoms of these groups are replaced with a halogen atom or a cyano group.

Specifically, examples of the alkyl group include a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, a decyl group, and the like. Examples of the cycloalkyl group include a cyclopropyl group, a cyclobutyl group, a cyclohexyl group, and the like. Examples of the aryl group include a phenyl group, a tolyl group, a xylyl group, a naphthyl group, and the like. Examples of the alkenyl group include an alkenyl group having from 2 to 10 carbon atoms, such as an allyl group, a butenyl group, a pentenyl group, a hexenyl group, and the like. From the viewpoint of efficiently adsorbing the fluorine-containing low molecular weight compound to the adsorbent, R may be a methyl group.

In one aspect, the "monovalent hydrocarbon group having from 1 to 10 carbon atoms" may be an alkenyl group having from 2 to 10 carbon atoms, specifically, a vinyl group, an allyl group, a butenyl group, a pentenyl group, a hexenyl group, and the like, or a group in which some or all of the hydrogen atoms of these groups are replaced with a halogen atom, such as fluorine, bromine, or chlorine, or a cyano group.

In one aspect, from the viewpoint of efficiently adsorbing the fluorine-containing low molecular weight compound to the adsorbent, each R may be the same as each other.

In one aspect, from the viewpoint of efficiently adsorbing the fluorine-containing low molecular weight compound to the adsorbent, R is an unsubstituted group.

In one aspect, a is from 1.9 to 2.1.

The silicone elastomer may be a homopolymer composed of one type of polymer, or a copolymer composed of two or more types of polymers.

In one aspect, the silicone elastomer may be, for example, polydimethylsiloxane. In one aspect, the silicone elastomer may be, for example, a copolymer of dimethylsiloxane and an organosiloxane other than dimethylsiloxane. The organosiloxane other than dimethylsiloxane may be a type of organosiloxane selected from the group consisting of vinylmethylsiloxane, diphenylsiloxane, and methyltrifluoropropylsiloxane.

The silicone elastomer that can be included in the adsorbent may be a commercially available silicone elastomer.

### [Fluoroelastomer]

A fluoroelastomer is a polymer that contains a fluorine atom in the molecule. For example, the fluoroelastomer can be a hydrocarbon compound substituted with a fluorine atom.

The fluoroelastomer may include a monomer unit derived from a fluorine-containing monomer represented by the following formula:

CF₂=CR¹R²

wherein R¹ is a hydrogen atom or a fluorine atom,
R² is a hydrogen atom, a fluorine atom, an alkyl group having from 1 to 6 carbon atoms optionally substituted with a fluorine atom, or an alkoxy group having from 1 to 6 carbon atoms optionally substituted with a fluorine atom.

R¹ is a hydrogen atom or a fluorine atom.

R² is a hydrogen atom, a fluorine atom, an alkyl group having from 1 to 6 carbon atoms optionally substituted with a fluorine atom, or an alkoxy group having from 1 to 6 carbon atoms optionally substituted with a fluorine atom.

The fluoroelastomer may be a homopolymer composed of one type of polymer, or a copolymer composed of two or more types of polymers. From the viewpoint of efficiently adsorbing the fluorine-containing low molecular weight compound to the adsorbent, the fluoroelastomer may be a copolymer composed of two or more types of polymers.

The copolymer composed of two or more types of polymers may include one or more types of the monomer unit derived from the fluorine-containing monomer represented by the above formula CF₂=CR¹R². For example, the fluoroelastomer may be at least one selected from the group consisting of a vinylidene fluoride (VDF)/hexafluoropropylene (HFP) copolymer, a VDF/HFP/tetrafluoroethylene (TFE) copolymer, a TFE/propylene copolymer, a TFE/propylene/VDF copolymer, an ethylene/HFP copolymer, an ethylene/HFP/VDF copolymer, an ethylene/HFP/TFE copolymer, a VDF/TFE/perfluoro(alkyl vinyl ether) (PAVE) copolymer, and a VDF/chlorotrifluoroethylene (CTFE) copolymer.

In one aspect, from the viewpoint of efficiently adsorbing the fluorine-containing low molecular weight compound to the adsorbent, the fluoroelastomer may be a VDF/HFP copolymer, which is a binary material, or VDF/TFE/HFP copolymer, which is a ternary material, and may preferably be a binary material VDF/HFP copolymer.

The VDF/HFP copolymer has a VDF/HFP molar ratio of preferably from 45 to 85/55 to 15, more preferably from 50 to 80/50 to 20, and further preferably from 60 to 80/40 to 20.

The VDF/HFP/TFE copolymer may have a VDF/HFP/TFE molar ratio of from 40 to 80/10 to 35/10 to 35.

The fluoroelastomer that can be included in the adsorbent may be a commercially available fluoroelastomer.

### [Fluorine-containing low molecular weight compound]

In the adsorption method of this disclosure, the fluorine-containing low molecular weight compound adsorbed to the adsorbent means a low molecular weight compound containing a fluorine atom in the molecule. The fluorine-containing low molecular weight compound may be a low molecular weight compound in which some or all of the hydrogen atoms bonded to the carbon atoms, sulfur atoms, silicon atoms, and/or nitrogen atoms in the molecule are replaced with fluorine atoms. The fluorine-containing low molecular weight compound may contain a halogen atom other than a fluorine atom, for example, may contain a chlorine atom and/or a bromine atom.

The molecular weight of the fluorine-containing low molecular weight compound may be 1,000 or less. From the viewpoint of efficiently adsorbing the fluorine-containing compound to the adsorbent, the molecular weight of the fluorine-containing low molecular weight compound may be 30 or more and 1,000 or less, preferably 30 or more and 500 or less, and more preferably 30 or more and 400 or less.

In one embodiment, the fluorine-containing low molecular weight compound has a saturated vapor pressure in the temperature range of -150°C to 150°C and contains one or more fluorine atoms. As used herein, "saturated vapor pressure" refers to the pressure of the gas when the liquid and the gas of the fluorine-containing low molecular weight compound are in an equilibrium state. The saturated vapor pressure may be the saturated vapor pressure at the point that is equal to the atmospheric pressure. The boiling point is the temperature of the fluorine-containing low molecular weight compound when the saturated vapor pressure of the fluorine-containing low molecular weight compound is equal to the atmospheric pressure. By using a fluorine-containing low molecular weight compound having a saturated vapor pressure in the above temperature range, it is easier for the fluorine-containing low molecular weight compound to be adsorbed to the adsorbent.

From the viewpoint of efficiently adsorbing the fluorine-containing low molecular weight compound to the adsorbent, the fluorine-containing low molecular weight compound may have a saturated vapor pressure in the temperature range of -120°C to 100°C, preferably in the temperature range of -100°C to 60°C, more preferably - 100°C to 20°C, further preferably -100°C to -20°C, and particularly preferably -90°C to -40°C.

The saturated vapor pressure may be a saturated vapor pressure obtained by a conventional measurement method. For example, the saturated vapor pressure may be determined by a static method, a boiling point method, a DSC method, a gas flow method, an isoteniscope method, or the like.

The fluorine-containing low molecular weight compound may be at least one fluorocarbon represented by formula (1) or (2):

CₚF_{q}Yᵣ (1)

wherein p, q, and r are integers of 1 or more,
q+r=2p+2, and
each Y independently represents one atom selected from the group consisting of a halogen atom and a hydrogen atom,

   CₙFₘZₗ (2)
wherein n, m, and 1 are integers of 1 or more,
m+l=2n and n≥2, and
each Z independently represents one atom selected from the group consisting of a halogen atom and a hydrogen atom.

In one aspect, p may be 1 or more and 10 or less and q may be 2 or more, and preferably p may be 1 or more and 5 or less and q may be 2 or more. From the viewpoint of efficiently adsorbing the fluorine-containing low molecular weight compound to the adsorbent, p may be 1 or 2, and q may be 2 or more.

In one aspect, Y may be a chlorine atom.

In one aspect, n may be 2 or more and 10 or less and m may be 2 or more, and preferably n may be 2 or more and 5 or less and m may be 2 or more. From the viewpoint of efficiently adsorbing the fluorine-containing low molecular weight compound to the adsorbent, n may be 2 or 3, and m may be 2 or more.

In one aspect, Z may be a hydrogen atom.

The fluorine-containing low molecular weight compound may be one or more fluorine-containing low molecular weight compounds selected from the group consisting of a chlorofluorocarbon (CFC), a hydrochlorofluorocarbon (HCFC), a hydrofluorocarbon (HFC), and a hydrofluoroolefin (HFO).

Examples of the CFC include trichlorofluoromethane (CFC-11), dichlorodifluoromethane (CFC-12), chlorotrifluoromethane (CFC-13), 1,1,2-trichloro-1,2,2-trifluoroethane (CFC-113), 1,2-dichlorotetrafluoroethane (CFC-114), and chloropentafluoroethane (CFC-115).

Examples of the HCFC include chlorodifluoromethane (HCFC-22), 2,2-dichloro-1,1,1-trifluoroethane (HCFC-123), 2-chloro-1,1,1,2-tetrafluoroethane (HCFC-124), 1,1-dichloro-1-fluoroethane (HCFC-141b), 1-chloro-1,1-difluoroethane (HCFC-122b), 3,3-dichloro-1,1,1,2,2-pentafluoropropane (HCFC-225ca), and 1,3-dichloro-1,1,2,2,3-pentafluoropropane (HCFC-225cb).

Examples of the HFC include trifluoromethane (HFC-23), difluoromethane (HFC-32), 1,1,1,2,2-pentafluoroethane (HFC-125), 1,1,1,2-tetrafluoroethane (HFC-134a), trifluoroethane (HFC-143a), 1,1-difluoroethane (HFC-152a), 1,1,1,2,3,3,3-heptafluoropropane (HFC-227ea), 1,1,1,3,3,3-hexafluoropropane (HFC-236fa), 1,1,1,2,2-pentafluoropropane (HFC-245fa), and 1,1,1,3,3-pentafluorobutane (HFC-365mfc).

Examples of the HFO include 2,3,3,3-tetrafluoropropene (HFO-1234yf) and 1,3,3,3-tetrafluoropropene (HFO-1234ze).

In one aspect, from the viewpoint of efficiently adsorbing the fluorine-containing low molecular weight compound to the adsorbent, the fluorine-containing low molecular weight compound may be at least one fluorine-containing low molecular weight compound selected from the group consisting of HFC-32, HFC-125, HCFC-22, HFC-134a, and HFO-1234yf.

In one aspect, from the viewpoint of efficiently adsorbing the fluorine-containing low molecular weight compound to the adsorbent, the fluorine-containing low molecular weight compound may be at least one fluorine-containing low molecular weight compound selected from the group consisting of HFC-32, HFC-125, HFC-134a, and HFO-1234yf.

The adsorption method of this disclosure can control the adsorption amount of the fluorine-containing low molecular weight compound to the adsorbent based on the difference between the polarizability of the adsorbent and the polarizability of the fluorine-containing low molecular weight compound. In the adsorption method of this disclosure, in particular when the difference between the polarizability of the adsorbent and the polarizability of the fluorine-containing low molecular weight compound is small, the adsorption amount of the fluorine-containing low molecular weight compound to the adsorbent tends to be large. It is easier to adjust the ratio of each of a plurality of different fluorine-containing low molecular weight compounds to be adsorbed to one type of adsorbent based on the difference between the polarizability of the adsorbent and the polarizability of the fluorine-containing low molecular weight compounds.

The mechanism of adsorption of the fluorine-containing low molecular weight compound to the adsorbent is not entirely clear, but it is thought that the intermolecular forces acting between the adsorbent and the fluorine-containing low molecular weight compound is factor. Electrical interaction is thought to be the dominant intermolecular force controlling the adsorption amount, and this electrical interaction is thought to be caused by the difference between the polarizability of the adsorbent and the polarizability of the fluorine-containing low molecular weight compound.

The polarizability of the adsorbent is a value obtained by converting the polarizability determined by density functional theory (DFT) per unit volume. Specifically, for an oligomer having a degree of polymerization of 3 or more composed of a monomer of the adsorbent, the polarizability is calculated for a stable structure obtained by a structure optimization calculation. The polarizability of the adsorbent is a value determined by dividing the calculated polarizability of the oligomer of the adsorbent by the molecular volume of the oligomer of the adsorbent. For the quantum chemical calculation, in the structure optimization calculation, ωB97X-D was used as the exchange-correlation functional, and 6-31G(d,p) was applied as the basis set. In the polarizability calculation, ωB97X-D was used as the exchange-correlation functional, and 6-311++G(2d,p) was applied as the basis set. Gaussian 16, which is a quantum chemical calculation program by Gaussian, was used as the quantum chemical calculation program. RDKit, which is a software program for chemoinformatics, was used to calculate the molecular volume.

The polarizability of the fluorine-containing low molecular weight compound is a value obtained by converting the polarizability determined by density functional theory (DFT) per unit volume. Specifically, for a molecule of the fluorine-containing low molecular weight compound, the polarizability is calculated for a stable structure obtained by a structure optimization calculation. The polarizability of the fluorine-containing low molecular weight compound is a value determined by dividing the calculated polarizability of the fluorine-containing low molecular weight compound by the molecular volume of the fluorine-containing low molecular weight compound. For the quantum chemical calculation, in the structure optimization calculation, ωB97XD was used as the exchange-correlation functional, and 6-31G(d,p) was applied as the basis set. In the polarizability calculation, ωB97X-D was used as the exchange-correlation functional, and 6-311++G(2d,p) was applied as the basis set. Gaussian 16, which is a quantum chemical calculation program by Gaussian, was used as the quantum chemical calculation program. RDKit, which is a software program for chemoinformatics, was used to calculate the molecular volume.

The difference between the polarizability of the adsorbent and the polarizability of the fluorine-containing low molecular weight compound may be set in accordance with the type of the fluorine-containing low molecular weight compound to be adsorbed to the adsorbent. For example, the difference between the polarizability of the adsorbent and the polarizability of the fluorine-containing low molecular weight compound may be 0.001 or more and 0.01 or less, preferably 0.003 or more and 0.08 or less, and more preferably 0.005 or more and 0.08 or less, and further preferably 0.007 or more and 0.06 or less. The difference between the polarizability of the adsorbent and the polarizability of the fluorine-containing low molecular weight compound may be an absolute value.

### (Adsorption/desorption method)

Hereinafter, the adsorption/desorption method of this disclosure will be described.

The adsorption/desorption method of this disclosure includes adsorbing a fluorine-containing low molecular weight compound by the adsorption method of this disclosure, and placing the adsorbent adsorbing the fluorine-containing low molecular weight compound under a reduced pressure condition to desorb the fluorine-containing low molecular weight compound from the adsorbent.

An adsorbent adsorbing a fluorine-containing low molecular weight compound can be obtained by the adsorption method of this disclosure. The fluorine-containing low molecular weight compound can be desorbed from the adsorbent by placing the adsorbent adsorbing the fluorine-containing low molecular weight compound under a reduced pressure condition. For example, adsorption and desorption can be performed by performing the following steps in order.
i) Seal the adsorbent in a pressure container.
ii) Create a vacuum condition inside the pressure container in which the adsorbent is sealed.
iii) Introduce the fluorine-containing low molecular weight compound into the pressure container in which the adsorbent is sealed until a predetermined pressure is reached.
iv) After introducing the fluorine-containing low molecular weight compound until the predetermined pressure is reached, reduce the pressure inside the pressure container.

In (iv), the fluorine-containing low molecular weight compound can be desorbed from the adsorbent placed under reduced pressure, and the pressure inside the container can change. From the pressure change, the adsorption amount of the fluorine-containing low molecular weight compound with respect to the adsorbent can be quantified.

The conditions for i) to iii) above may be the same conditions as in the adsorption method of this disclosure.

The reduced pressure condition of step iv) may be a vacuum condition. The vacuum condition of step iv) may be, in terms of gauge pressure, from -0.1 MPa to -0.01 MPa, preferably from -0.1 MPa to -0.05 MPa, and more preferably from -0.1 MPa to -0.07 MPa. In one aspect, the pressure inside the pressure container in which the adsorbent is sealed may be -0.1 MPa in terms of gauge pressure. The fluorine-containing low molecular weight compound can be desorbed from the adsorbent placed under reduced pressure, and the pressure inside the container can change. The adsorption amount of the fluorine-containing low molecular weight compound to the adsorbent can be quantified by applying the pressure change to the equation of state of the ideal gas of PV=nRT.

The length of time that the adsorbent to which the fluorine-containing low molecular weight compound is adsorbed is placed under a reduced pressure condition can be appropriately selected based on the amount of the fluorine-containing low molecular weight compound to be desorbed from the adsorbent. From the viewpoint of efficiently desorbing the fluorine-containing low molecular weight compound from the adsorbent, the length of time that the adsorbent and the fluorine-containing low molecular weight compound are brought into contact with each other may be 20 minutes or more and 360 minutes or less, preferably 40 minutes or more and 240 minutes or less, more preferably 60 minutes or more and 180 minutes or less, and particularly preferably 100 minutes or more and 140 minutes or less. In one aspect, the length of time for placing under a reduced pressure condition may be 120 minutes.

The temperature when under the vacuum condition can be appropriately selected based on the amount of the fluorine-containing low molecular weight compound to be desorbed from the adsorbent. From the viewpoint of efficiently desorbing the fluorine-containing low molecular weight compound from the adsorbent, the temperature at which the adsorbent and the fluorine-containing low molecular weight compound are brought into contact with each other may be -50°C or higher and 50°C or lower, preferably -30°C or higher and 30°C or lower, more preferably -15°C or higher and 15°C or lower, and particularly preferably -5°C or higher and 5°C or lower. In one aspect, the temperature when the fluorine-containing low molecular weight compound is desorbed from the adsorbent may be 25°C.

### (Composition)

The composition of this disclosure will be described below.

The composition of this disclosure includes an adsorbent that contains at least one polymer selected from the group consisting of at least one elastomer selected from the group consisting of a hydrocarbon-based elastomer, a silicone elastomer, and a fluoroelastomer, and a cured product of the elastomer, and a fluorine-containing low molecular weight compound adsorbed to the adsorbent.

The composition of this disclosure can be obtained, for example, by the adsorption method of this disclosure. Specifically, the composition can be obtained by bringing an adsorbent and a fluorine-containing low molecular weight compound into contact with each other to cause the adsorbent to adsorb the fluorine-containing low molecular weight compound.

The composition of this disclosure can function, for example, as a storage material that stores a fluorine-containing low molecular weight compound, or a storage and release material that stores and releases a fluorine-containing low molecular weight compound.

The composition of this disclosure includes a fluorine-containing low molecular weight compound. Specifically, the composition of this disclosure may contain 0.01% by mass or more and 35% by mass or less of a fluorine-containing low molecular weight compound with respect to with respect to the total amount of the composition. From the viewpoint of enabling the composition to stably store the fluorine-containing low molecular weight compound, the composition of this disclosure may contain, with respect to the total amount of the composition, 0.01% by mass or more and 30% by mass or less, and preferably 0.01% by mass or more and 25% by mass or less, of a fluorine-containing low molecular weight compound.

The adsorption method, adsorption/desorption method, and composition of this disclosure have been described in detail above. However, the adsorption method, adsorption/desorption method, composition, and the like of this disclosure are not limited to the examples given above.

### Examples

Hereinafter, the adsorption method and adsorption/desorption method of this disclosure will be described with reference to the following Examples, but this disclosure is not limited to the following Examples.

### (Measurement of polarizability)

The polarizability of the adsorbent is a value obtained by converting the polarizability determined by density functional theory (DFT) per unit volume. Specifically, for an oligomer having a degree of polymerization of 3 or more composed of a monomer of the adsorbent, the polarizability is calculated for a stable structure obtained by a structure optimization calculation. The polarizability of the adsorbent is a value determined by dividing the calculated polarizability of the oligomer of the adsorbent by the molecular volume of the oligomer of the adsorbent. The polarizability of the fluorine-containing low molecular weight compound is a value obtained by converting the polarizability determined by density functional theory (DFT) per unit volume. Specifically, for a molecule of the fluorine-containing low molecular weight compound, the polarizability is calculated for a stable structure obtained by a structure optimization calculation. The polarizability of the fluorine-containing low molecular weight compound is a value determined by dividing the calculated polarizability of the fluorine-containing low molecular weight compound by the molecular volume of the fluorine-containing low molecular weight compound. For the quantum chemical calculation, in the structure optimization calculation, ωB97X-D was used as the exchange-correlation functional, and 6-31G(d,p) was applied as the basis set. In the polarizability calculation, ωB97X-D was used as the exchange-correlation functional, and 6-311++G(2d,p) was applied as the basis set. Gaussian 16, which is a quantum chemical calculation program by Gaussian, was used as the quantum chemical calculation program. RDKit, which is a software program for chemoinformatics, was used to calculate the molecular volume. The polarizability of the adsorbent and the polarizability of the fluorine-containing low molecular weight compound are shown in Tables 1 and 2, respectively.

**[Table 1]**

| Adsorbent | Polarizability |
|---|---|
| Polydimethylsiloxane elastomer (KMP-598) | 0.0982 |
| Acrylonitrile butadiene elastomer (PN20HA) | 0.117 |
| Vinylidene fluoride-hexafluoropropylene elastomer (G-701BP) | 0.0737 |
| Acrylonitrile butadiene elastomer (S215SL) | 0.114 |

**[Table 2]**

| Fluorine-containing low | Polarizability |
|---|---|
| molecular weight compound | |
| R22 | 0.0819 |
| R125 | 0.0598 |
| R134a | 0.0629 |
| R1234yf | 0.0747 |

### (Difference between polarizability of adsorbent and polarizability of fluorine-containing low molecular weight compound)

The difference between the polarizability of the adsorbent and the polarizability of the fluorine-containing low molecular weight compound (hereinafter also referred to as "difference in polarizability from adsorbent") is expressed as (polarizability of adsorbent - polarizability of fluorine-containing low molecular weight compound).

### Example 1

An elastomer material of polydimethylsiloxane ("KMP-598", manufactured by Shin-Etsu Chemical Co., Ltd., linear polydimethylsiloxane) was used as the adsorbent. A bulk sample of the elastomer material was crushed, and then a powder having a maximum particle size of 80 µm was prepared using an N₂ freeze crusher.

To show that the elastomer material adsorbs the fluorine-containing low molecular weight compound, and desorbs the fluorine-containing low molecular weight compound by reducing the pressure after adsorption, using the above powder, an adsorption/desorption experiment from the gas phase was conducted using each of the fluorine-containing low molecular weight compounds chlorodifluoromethane (R22) and pentafluoroethane (R125).

Approximately 10 g of the powder of the elastomer material was weighed, and sealed into a certain pressure container. Then, the inside of the container was set to a temperature of 25°C and a gauge pressure of -0.1 MPa as the vacuum condition. The fluorine-containing low molecular weight compounds R22 and R125 were then introduced until the pressure reached 0.8 MPa for R22 and 0.8 MPa for R125, respectively. After introduction, the adsorption amount to the powder was quantified by applying the pressure change during desorption at a temperature of 25°C in a vacuum having a gauge pressure of -0.1 MPa to the equation of state of the ideal gas of PV=nRT. The results of the adsorption and desorption are shown in Table 3.

### Example 2

An elastomer material of an acrylonitrile butadiene elastomer ("PN20HA", manufactured by JSR, acrylonitrile content: 41.5%) was used as the adsorbent. A bulk sample of the elastomer material was crushed, and then a powder having a maximum particle size of 80 µm was prepared using an N₂ freeze crusher.

To show that the elastomer material adsorbs the fluorine-containing low molecular weight compound, and desorbs the fluorine-containing low molecular weight compound by reducing the pressure after adsorption, using the above powder, an adsorption/desorption experiment from the gas phase was conducted using each of the fluorine-containing low molecular weight compounds R22 and R125.

Approximately 10 g of the powder of the elastomer material was weighed, and sealed into a certain pressure container. Then, the inside of the container was set to a temperature of 25°C and a gauge pressure of -0.1 MPa as the vacuum condition. The fluorine-containing low molecular weight compounds R22 and R125 were then introduced until the pressure reached the predetermined pressure of 5 MPa. After introduction, the adsorption amount to the powder was quantified by applying the pressure change during desorption in a vacuum having a gauge pressure of -0.1 MPa to the equation of state of the ideal gas of PV=nRT. The results of the adsorption and desorption are shown in Table 3.

### Example 3

Adsorption and desorption of the fluorine-containing low molecular weight compounds were carried out by the same method as in Example 2, except that a vinylidene fluoride-hexafluoropropylene elastomer (crude elastomer "G-701BP", manufactured by Daikin, binary fluoroelastomer) was used as the adsorbent. The results of the adsorption and desorption are shown in Table 3.

**[Table 3]**

| | | | R22 | | R125 | |
|---|---|---|---|---|---|---|
| | | | Difference in polarizabili ty from adsorbent | Adsorpti on amount (% by mass) | Difference in polarizabili ty from adsorbent | Adsorpti on amount (% by mass) |
| Adsorbent | Example 1 | Polydimethyls iloxane elastomer (KMP-598) | 0.016 | 20.6 | 0.03.8 | 7.21 |
| | Example 2 | Acrylonitrile butadiene elastomer (PN20HA) | 0.035 | 0.096 | 0.057 | 0.027 |
| | Example 3 | Vinylidene fluoride-hexafluoropro pylene elastomer (G-701BP) | -0.008 | 0.057 | 0.013 | 0.03 |

### Example 4

An elastomer material of an acrylonitrile butadiene elastomer ("PN20HA", manufactured by JSR, acrylonitrile content: 41.50) was used as the adsorbent. A bulk sample of the elastomer material was crushed, and then a powder having a maximum particle size of 80 µm was prepared using an N₂ freeze crusher.

To show that the elastomer material adsorbs the fluorine-containing low molecular weight compound, and desorbs the fluorine-containing low molecular weight compound by reducing the pressure after adsorption, using the above powder, an adsorption/desorption experiment from the gas phase was conducted using each of the fluorine-containing low molecular weight compounds 1,1,1,2-tetrafluoroethane (R134a) and 2,3,3,3-tetrafluoropropene (R1234yf).

Approximately 10 g of the powder of the elastomer material was weighed, and sealed into a certain pressure container. Then, the inside of the container was set to a temperature of 25°C and a gauge pressure of -0.1 MPa as the vacuum condition. The fluorine-containing low molecular weight compounds R22 and R125 were then introduced until the pressure reached the predetermined pressure of 5 MPa. After introduction, the adsorption amount to the powder was quantified by applying the pressure change during desorption in a vacuum having a gauge pressure of -0.1 Pa to the equation of state of the ideal gas of PV=nRT. The results of the adsorption and desorption are shown in Table 4.

### Example 5

Adsorption and desorption of the fluorine-containing low molecular weight compounds were carried out by the same method as in Example 4, except that an acrylonitrile butadiene elastomer ("S215SL", manufactured by JSR, acrylonitrile content: 47.5%) was used as the adsorbent. The results of the adsorption and desorption are shown in Table 4.

**[Table 4]**

| | | | R134a | | R1234yf | |
|---|---|---|---|---|---|---|
| | | | Difference in polarizabil ity from adsorbent | Adsorption amount (% by mass) | Difference in polarizabil ity from adsorbent | Adsorption amount (% by mass) |
| Adsorbent | Example 4 | Acrylonit rile butadiene elastomer (PN20HA) | 0.0539 | 0.056 | 0.0421 | 0.034 |
| | Example 5 | Acrylonit rile butadiene elastomer (S215SL) | 0.0525 | 0.17 | 0.0407 | 0.16 |

From the above results, it was possible to adsorb the fluorine-containing low molecular weight compound to the adsorbent by the adsorption method disclosed in this disclosure. Further, using the adsorption/desorption method described in this disclosure, it was possible to adsorb the fluorine-containing low molecular weight compound to the adsorbent and then desorb the fluorine-containing low molecular weight compound. In addition, different types of fluorine-containing low molecular weight compounds could be adsorbed and desorbed by one type of adsorbent.

### Industrial Applicability

The adsorption method of this disclosure can be suitably used in a variety of applications, for example, as a method for recovering a fluorine-containing low molecular weight compound.

## Claims

1. A method for adsorbing a fluorine-containing low molecular weight compound, the method comprising:
bringing an adsorbent and the fluorine-containing low molecular weight compound into contact with each other to cause the adsorbent to adsorb the fluorine-containing low molecular weight compound, wherein
the adsorbent comprises at least one polymer selected from the group consisting of an elastomer and a cured product of the elastomer, and
the elastomer comprises at least one elastomer selected from the group consisting of a hydrocarbon-based elastomer, a silicone elastomer, and a fluoroelastomer.

2. The method for adsorbing a fluorine-containing low molecular weight compound according to claim 1, wherein the adsorbent is a particulate adsorbent.

3. The method for adsorbing a fluorine-containing low molecular weight compound according to claim 2, wherein the adsorbent has a particle size of less than 1.0 mm.

4. The method for adsorbing a fluorine-containing low molecular weight compound according to any one of claims 1 to 3, wherein the hydrocarbon-based elastomer is a diene-based elastomer.

5. The method for adsorbing a fluorine-containing low molecular weight compound according to any one of claims 1 to 4, wherein the hydrocarbon-based elastomer comprises a monomer unit represented by:
-CH₂-C(-X¹)=CH-CH₂-
wherein X¹ is a hydrogen atom, a chlorine atom, or an alkyl group having from 1 to 6 carbon atoms.

6. The method for adsorbing a fluorine-containing low molecular weight compound according to any one of claims 1 to 5, wherein the hydrocarbon-based elastomer further comprises a monomer unit represented by:
-CH₂CHX²-
wherein X² is a hydrogen atom, an alkyl group having from 1 to 6 carbon atoms, a cyano group, or a phenyl group.

7. The method for adsorbing a fluorine-containing low molecular weight compound according to any one of claims 1 to 6, wherein the hydrocarbon-based elastomer is an acrylonitrile butadiene elastomer, and the acrylonitrile butadiene elastomer has an acrylonitrile content of 10 mol% or more and 60 mol% or less.

8. The method for adsorbing a fluorine-containing low molecular weight compound according to any one of claims 1 to 7, wherein the silicone elastomer comprises a compound represented by the average compositional formula:
RₐSiO_{(4-a)/2}
wherein R is an unsubstituted or substituted monovalent hydrocarbon group having from 1 to 10 carbon atoms, and each R is the same or different from each other, and
a is from 1.9 to 2.1.

9. The method for adsorbing a fluorine-containing low molecular weight compound according to claim 8, wherein R is an alkyl group, a cycloalkyl group, an alkenyl group, a vinyl group, an aryl group, or a group in which some or all of the hydrogen atoms of these groups are replaced with a halogen atom or a cyano group.

10. The method for adsorbing a fluorine-containing low molecular weight compound according to any one of claims 1 to 9, wherein the silicone elastomer is polydimethylsiloxane.

11. The method for adsorbing a fluorine-containing low molecular weight compound according to any one of claims 1 to 10, wherein the fluoroelastomer comprises a monomer unit derived from a fluorine-containing monomer represented by the following formula:
CF₂=CR¹R²
wherein R¹ is a hydrogen atom or a fluorine atom,
R² is a hydrogen atom, a fluorine atom, an alkyl group having from 1 to 6 carbon atoms optionally substituted with a fluorine atom, or an alkoxy group having from 1 to 6 carbon atoms optionally substituted with a fluorine atom.

12. The method for adsorbing a fluorine-containing low molecular weight compound according to any one of claims 1 to 11, wherein the fluoroelastomer is a vinylidene fluoride/hexafluoropropylene copolymer, and the vinylidene fluoride/hexafluoropropylene copolymer has a molar ratio of vinylidene fluoride/hexafluoropropylene of from 45/55 to 85/15.

13. The method for adsorbing a fluorine-containing low molecular weight compound according to any one of claims 1 to 12, wherein the fluorine-containing low molecular weight compound has a saturated vapor pressure in a temperature range of -150°C to 150°C and contains one or more fluorine atoms.

14. The method for adsorbing a fluorine-containing low molecular weight compound according to any one of claims 1 to 13, wherein the fluorine-containing low molecular weight compound is at least one fluorocarbon represented by formula (1) or (2):
CₚF_{q}Yᵣ (1)
wherein p, q, and r are integers of 1 or more, q+r=2p+2, and
each Y independently represents one atom selected from the group consisting of a halogen atom and a hydrogen atom,
CₙFₘZₗ (2)
wherein n, m, and 1 are integers of 1 or more,
m+l=2n and n≥2, and
each Z independently represents one atom selected from the group consisting of a halogen atom and a hydrogen atom.

15. The method for adsorbing a fluorine-containing low molecular weight compound according to claim 14, wherein p is 1 or 2, and q is 2 or more.

16. The method for adsorbing a fluorine-containing low molecular weight compound according to claim 14 or 15, wherein the halogen atom in Y is a chlorine atom.

17. The method for adsorbing a fluorine-containing low molecular weight compound according to any one of claims 14 to 16, wherein n is 2 or 3, and m is 2 or more.

18. The method for adsorbing a fluorine-containing low molecular weight compound according to any one of claims 14 to 17, wherein Z is a hydrogen atom.

19. The method for adsorbing a fluorine-containing low molecular weight compound according to any one of claims 1 to 18, wherein the fluorine-containing low molecular weight compound is at least one selected from the group consisting of chlorodifluoromethane, pentafluoromethane, 1,1,1,2-tetrafluoroethane, and 2,3,3,3-tetrafluoropropene.

20. The method for adsorbing a fluorine-containing low molecular weight compound according to any one of claims 1 to 19, wherein an adsorption amount of the fluorine-containing low molecular weight compound in the adsorbent is controlled based on a difference between a polarizability of the adsorbent and the polarizability of the fluorine-containing low molecular weight compound.

21. A method for adsorbing and desorbing a fluorine-containing low molecular weight compound, the method comprising:
adsorbing a fluorine-containing low molecular weight compound by the method according to any one of claims 1 to 20; and
placing the adsorbent adsorbing the fluorine-containing low molecular weight compound under a reduced pressure condition to desorb the fluorine-containing low molecular weight compound from the adsorbent.

22. A composition comprising:
an adsorbent comprising at least one polymer selected from the group consisting of at least one elastomer selected from the group consisting of a hydrocarbon-based elastomer, a silicone elastomer, and a fluoroelastomer, and a cured product of the elastomer; and
a fluorine-containing low molecular weight compound adsorbed to the adsorbent.
